# EUROPÄISCHE PATENTSCHRIFT

(11) **EP 2 148 760 B1**
(45) Veröffentlichungstag und Bekanntmachung des Hinweises auf die Patenterteilung: **18.08.2010**
(21) Anmeldenummer: 08716919.9
(22) Anmeldetag: 19.02.2008
(51) Int. Cl.: B23Q 11/00, B24B 7/00

(54) **STAUBAUFFANGVORRICHTUNG**
DUST COLLECTION DEVICE
DISPOSITIF COLLECTEUR DE POUSSIÈRES

(30) Priorität: 18.04.2007 DE 102007017550
(43) Veröffentlichungstag der Anmeldung: 03.02.2010
(73) Patentinhaber: Robert Bosch GmbH, 70442 Stuttgart (DE)
(72) Erfinder: ROEHM, Heiko, 70176 Stuttgart (DE)
(86) Internationale Anmeldenummer: PCT/EP2008/051959
(87) Internationale Veröffentlichungsnummer: WO 2008/128799

(56) Entgegenhaltungen:
- EP-A- 0 558 253
- EP-A- 1 510 291
- DE-C1- 3 915 084

## Beschreibung

### Stand der Technik

Die Erfindung geht aus von einer Staubauffangvorrichtung für eine einen Staubausblasstutzen aufweisende Handwerkzeugmaschine, insbesondere für einen Elektrohandschleifer, nach dem Oberbegriff des Anspruchs 1.

Solche Vorrichtungen sind z. B. aus dem Dokument EP-A-0558253 bekannt.

Bekannte Staubauffangvorrichtungen für handgeführte Elektrowerkzeuge, wie z.B. Schwingschleifer, Exzenterschleifer oder Bandschleifer, weisen einen Staubauffangbeutel auf, der aus einem biegeschlaffen Filtersack aus Filterpapier oder Filtergewebe und einer den Filtersack an der Sacköffnung offenhaltenden Versteifungsplatte besteht, die eine Einlassöffnung zum Staubeintritt aufweist. Diese Versteifungsplatte besteht beispielsweise aus einem aufgeklebten Karton. Der Karton wird mit der Einlassöffnung über den Staubauffangstutzen der Handwerkzeugmaschine geschoben, wobei eine Steifigkeit des Kartons notwendig ist, um die Reibkräfte zu überwinden. Die Dichtheit zwischen Staubausblasstutzen und Staubauffangbeutel wird entweder über die Aufweitung des Kartons um die Einlassöffnung oder über eine hinter der bzw. um die Einlassöffnung angeordnete Gummidichtung sichergestellt, die radial den Staubausblasstutzen umschließt und deren Reibkräfte parallel in Montage- und Demontagerichtung sind. Zur Stabilisierung des biegeschlaffen Filtersacks wird üblicherweise ein zusätzliches Halteelement verwendet, das an dem Maschinengehäuse befestigt ist.

### Offenbarung der Erfindung

Die erfindungsgemäße Staubauffangvorrichtung mit den Merkmalen des Anspruchs 1 hat den Vorteil, dass durch den den Staubauffangbeutel aufnehmenden Träger die Montage und Demontage der Staubauffangvorrichtung am Staubausblasstutzen der Handwerkzeugmaschine für den Bedienenden wesentlich erleichtert und ergonomischer gestaltet wird. Der Staubauffangbeutel wird in den Träger eingelegt und mittels des Trägers auf den Staubausblasstutzen staubdicht aufgesetzt, wobei die durch den Träger angebotene, großflächige Greiffläche für eine deutlich verbesserte Handhabung sorgt. Durch den Träger wird zudem der Filtersack gegen Beschädigung geschützt und abgestützt. An der Handwerkzeugmaschine vorzusehende, zusätzliche Halteelemente für den Staubauffangbeutel, um ein Durchhängen oder Absacken des sich füllenden Staubauffangbeutels zu verhindern, entfallen. Die Filterfläche des Filtersacks kann voll genutzt werden. Die in der Aufnahmekammer gehaltene Versteifungsplatte kann dünner ausgeführt werden, so dass der Staubauffangbeutel insgesamt fertigungstechnisch kostengünstiger gestaltet werden kann.

Durch die in den weiteren Ansprüchen aufgeführten Maßnahmen sind vorteilhafte Weiterbildungen und Verbesserungen der im Anspruch 1 angegebenen Staubauffangvorrichtung möglich.

Gemäß einer bevorzugten Ausführungsform der Erfindung weist der Träger an seinem der Handwerkzeugmaschine zugekehrten vorderen Ende einen Gelenkteil zum lösbaren Verbinden mit einem maschinenseitigen Gelenkteil eines Schwenkgelenks auf. Durch eine geeignete Anordnung und Ausbildung des Schwenkgelenks wird die Versteifungsplatte mit ihrer Einlassöffnung durch einfaches Schwenken des Trägers auf den Staubausblasstutzen aufgeschoben. Durch die dabei erfolgende Hebelwirkung des Trägers auf die Versteifungsplatte wird ein kontrolliertes Aufschieben der Versteifungsplatte ohne ruckartiges Verhalten durch den Übergang von zwischen Versteifungsplatte und Staubausblasstutzen auftretender Haft- zur Gleitreibung erreicht.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
- Fig. 1: eine Draufsicht eines Trägers einer Staubauffangvorrichtung für eine Handwerkzeugmaschine mit schleifendem oder spanendem Werkzeug,
- Fig. 2: eine Seitenansicht des Trägers in Richtung Pfeil II in Fig. 1,
- Fig. 3: eine Stirnansicht des Trägers in Richtung III in Fig. 1,
- Fig. 4: eine Draufsicht eines Staubauffangbeutels der Staubauffangvorrichtung,
- Fig. 5: eine Seitenansicht des Staubauffangbeutels in Richtung Pfeil V in Fig. 4,
- Fig. 6: eine Vorderansicht des Staubauffangbeutels in Richtung Pfeil VI in Fig. 4,
- Fig. 7: ausschnittweise einen Längsschnitt gemäß Linie VII - VII in Fig. 2 des Trägers mit eingelegtem Staubauffangbeutel, angesetzt an eine Handwerkzeugmaschine vor Schwenken in die Betriebsstellung,
- Fig. 8: eine gleiche Darstellung wie in Fig. 7 nach Schwenken in die Betriebsstellung.

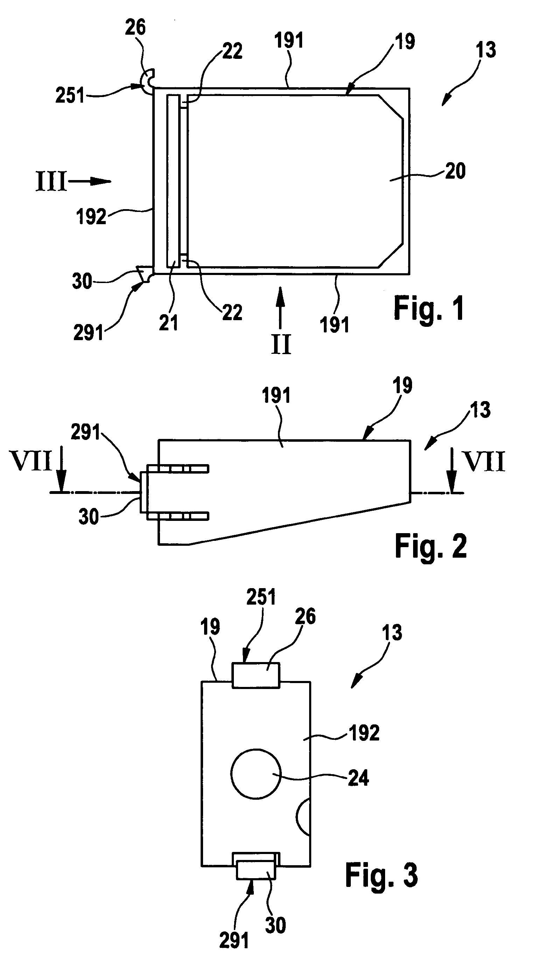

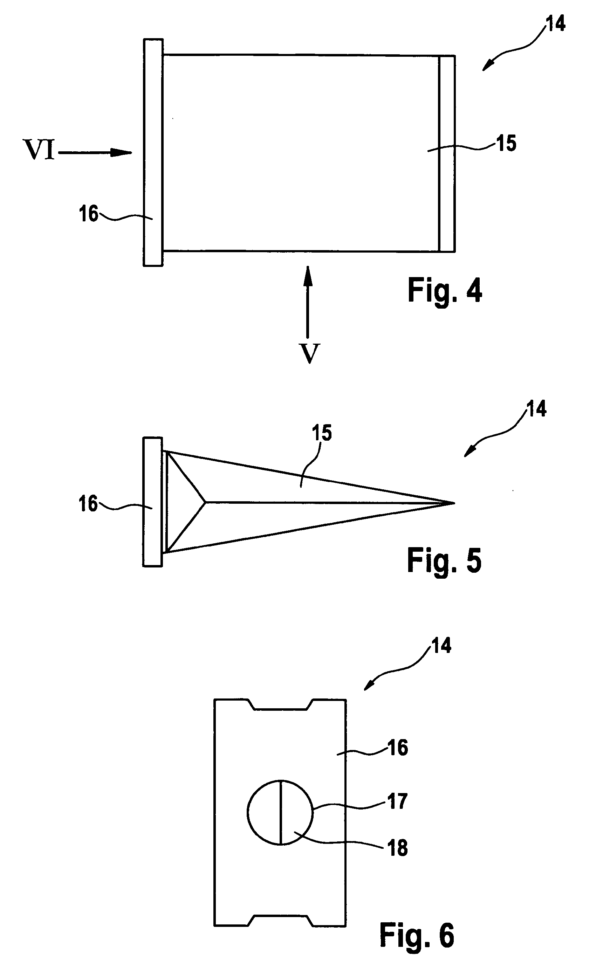

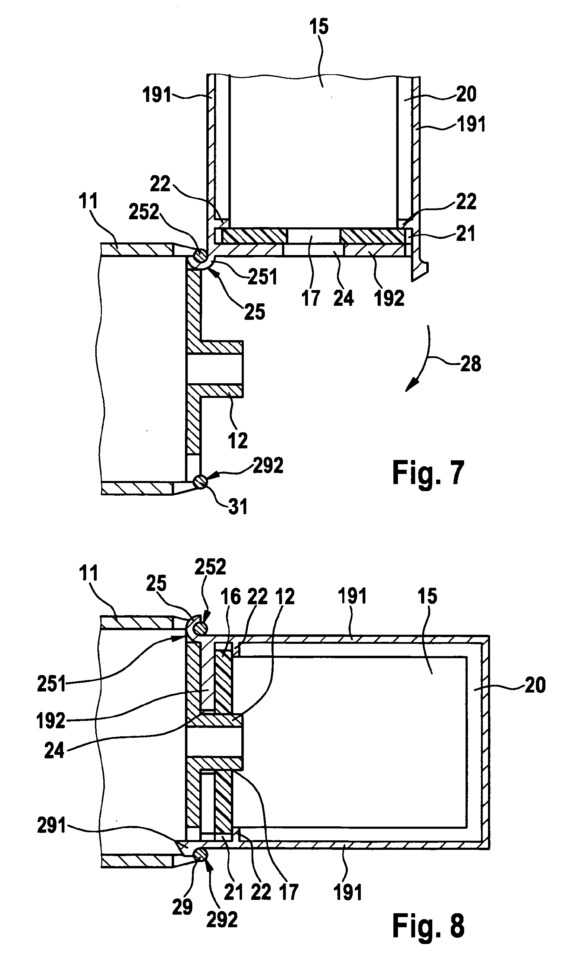

Die in Fig. 7 und 8 im Längsschnitt und in Fig. 1 bis 6 in ihren Einzelteilen dargestellte Staubauffangvorrichtung für eine Handwerkzeugmaschine mit einem schleifenden oder spanenden Werkzeug, z.B. für einen Elektrohandschleifer, wie Schwingschleifer, Exzenterschleifer oder Bandschleifer, aber auch für eine Handsägemaschine oder einen Elektrohobel, ist zum Ansetzen an das und Abnehmen von dem Maschinengehäuse 11 der Handwerkzeugmaschine im Bereich eines am Maschinengehäuse 11 ausgebildeten Staubausblasstutzens 12 der Handwerkzeugmaschine konzipiert. Hierzu weist die Staubauffangvorrichtung einen in Fig. 1 bis 3 in verschiedenen Ansichten dargestellten Träger 13 auf, in dem ein in Fig. 4 bis 6 in verschiedenen Ansichten dargestellter Staubauffangbeutel 14 eingelegt ist. Der an sich bekannte Staubauffangbeutel 14 weist einen luftdurchlässigen Filtersack 15 aus Filterpapier oder einem Filtergewebe und eine dem Filtersack 15 vorgesetzte Versteifungsplatte 16 aus Kunststoff oder Karton auf. Die Versteifungsplatte 16 hält die Öffnung des biegeschlaffen Filtersacks 15 offen und ist mit einer zentralen Einlassöffnung 17 (Fig. 6) für den staubbeladenen Luftstrom versehen.

Hinter der bzw. um die Einlassöffnung 17 ist üblicherweise noch eine Dichtungslippe 18 (Fig. 6) angeordnet, die an der Versteifungsplatte 16 befestigt ist und zur Staubabdichtung gegenüber dem Staubausblasstutzen 12 am Maschinengehäuse 11 dient.

Im Träger 13, der vorzugsweise ein z.B. aus Kunststoff, Metall oder Gummi hergestelltes und mit Durchbrüchen versehenes Gehäuse 19 aufweist, ist eine Filterkammer 20 zum Einlegen des Filtersacks 15 und eine der Filterkammer 20 vorgeordnete, rahmenartige Aufnahmekammer 21 zum Einschieben der Versteifungsplatte 16 ausgebildet. Der Übersichtlichkeit halber ist die stegartige Struktur des Gehäuses 19, die sich vom Boden in die Seitenwände des Gehäuses 19 fortsetzt, nicht dargestellt. Die zur Filterkammer 20 hin offene Aufnahmekammer 21 ist dabei durch zwei Führungsstege 22 von der Filterkammer 20 getrennt und von der Vorderwand 192 des Gehäuses 19 begrenzt. Die Führungsstege 22 verlaufen parallel zur Vorderwand 192 in einem Abstand von dieser, der wenig größer als die Dicke der Versteifungsplatte 16 des Staubauffangbeutels 14 ist, und stehen von den einander gegenüberliegenden Seitenwänden 191 des Gehäuses 19 ab. Das Gehäuse 19 ist oben offen, so dass sowohl die Filterkammer 20 als auch die Aufnahmekammer 21 frei zugänglich sind und der Staubauffangbeutel 14 von oben her in das Gehäuse 19 des Trägers 13 eingesetzt werden kann. Dabei wird die Versteifungsplatte 16 in die Aufnahmekammer 21 eingeschoben und der Filtersack 15 in die Filterkammer 20 eingelegt. Die in Fig. 3 zu sehende Vorderwand 192 des Gehäuses19 weist ein Zentralloch 24 auf, das so angeordnet ist, dass bei bündig eingeschobener Versteifungsplatte 16 das Zentralloch 24 mit der Einlassöffnung 17 in der Versteifungsplatte 16 des Staubauffangbeutels 14 koaxial ausgerichtet ist. Vorteilhaft weist das Zentralloch 24 einen etwas größeren lichten Durchmesser als die Einlassöffnung 17 auf, wie dies in Fig. 7 und 8 zu sehen ist.

Zum Verbinden der Staubauffangvorrichtung mit dem Maschinengehäuse 11 der Handwerkzeugmaschine ist seitlich an der Vorderwand 192 des Gehäuses 19 ein Gelenkteil 251 angeordnet, der mit einem am Maschinengehäuse 11 ausgebildeten Gelenkteil 252 zu einem Schwenkgelenk 25 zusammensetzbar ist. Die Drehachse des Schwenkgelenks 25 liegt dabei parallel zu der Einschieberichtung der Versteifungsplatte 16 in die Aufnahmekammer 21 in einer senkrecht zur Achse des Staubausblasstutzens 12 am Maschinengehäuse 11 ausgerichteten Querebene. Der trägerseitige Gelenkteil 251 ist als Schale 26 und der maschinenseitige Gelenkteil 252 als Zapfen 27 ausgebildet, der bei zusammengesetztem Schwenkgelenk 25 von der Schale 26 teilweise umgriffen wird. Das Zusammensetzen des Schwenkgelenks 25 erfolgt beim Ansetzen des Trägers 13 an das Maschinengehäuse 11, wozu die Achsen von Maschinengehäuse 11 und Träger 13 um ca. 90° zueinander auszurichten sind, wie dies in Fig. 7 dargestellt ist. Danach kann der Träger 13 in Richtung Pfeil 28 an das Maschinengehäuse 11 angeschwenkt werden. Beim Schwenken des Trägers 13 mit eingelegtem Staubauffangbeutel 14 wird die Einlassöffnung 17 mit Dichtungslippe 18 der Versteifungsplatte 16 des Staubauffangbeutels 14 auf den Staubausblasstutzen 12 am Maschinengehäuse 11 aufgeschoben und der Staubausblasstutzen 12 dringt über das Zentralloche 24 und die Einlassöffnung 17 partiell in den Filtersack 15 ein. Dadurch, dass der Träger 13 mit Abstand zur Schwenkachse geführt ist und dadurch eine Hebelwirkung an der Versteifungsplatte 16 erzeugt, werden die Reibkräfte von Einlassöffnung 17 und Dichtungslippe 18 auf dem Staubausblasstutzen 12 kontrolliert überwunden. Die Versteifungsplatte 16 sitzt fest auf dem Staubausblasstutzen 12 und die Dichtungslippe 18 hat sich um den Staubausblassstutzen 12 gelegt. Auf die Darstellung der Dichtungslippe 18 ist in Fig. 7 und 8 verzichtet worden. Dadurch, dass der Staubausblasstutzen 12 zumindest partiell durch die Einlassöffnung 17 in der Versteifungsplatte 16 hindurch in den Filtersack 15 hineinragt, kann in dem an das Maschinengehäuse 11 angeschwenkten Zustand der Staubauffangvorrichtung (Fig. 8) der Staubauffangbeutel 14 nicht aus dem Gehäuse 19 entnommen werden.

Zur lösbaren Verriegelung des Trägers 13 am Maschinengehäuse 11 nach Erreichen der Betriebsstellung der Staubauffangvorrichtung, wie sie in Fig. 8 dargestellt ist, ist an der anderen Seite der Vorderwand 192 des Gehäuses 19, dem trägerseitigen Gelenkteil 251 gegenüberliegend, ein Rastelement 291 vorgesehen, das mit einem am Maschinengehäuse 11 angeordneten Rastelement 292 eine Rastverbindung 29 herstellt. Das trägerseitige Rastelement 291 ist hier beispielhaft als Rasthaken 30 und das maschinenseitige Rastelement 292 als Rastbolzen 31 ausgeführt, der vom Rasthaken 30 kraftschlüssig hintergriffen wird.

## Patentansprüche

1. Staubauffangvorrichtung für eine einen Staubausblasstutzen (12) aufweisende Handwerkzeugmaschine, insbesondere für einen Elektrohandschleifer, mit einem Staubauffangbeutel (14), der einen luftdurchlässigen Filtersack (15) und eine dem Filtersack (15) vorgesetzte Versteifungsplatte (16) mit einer zum Aufschieben auf den Staubauslassstutzen (12) ausgebildeten Einlassöffnung (17) aufweist, **gekennzeichnet durch** einen an die Handwerkzeugmaschine ansetzbar ausgebildeten Träger (13), der eine Filterkammer (20) zum Einlegen des Filtersacks (15) und eine der Filterkammer (20) vorgeordnete Aufnahmekammer (21) zum Einschieben der Versteifungsplatte (16) aufweist.

2. Staubauffangvorrichtung nach Anspruch 1, **dadurch gekennzeichnet, dass** der Träger (13) an seinem die Aufnahmekammer (21) auf der von der Filterkammer (20) abgekehrten Seite begrenzenden, vorderen Ende einen Gelenkteil (251) zum lösbaren Verbinden mit einem an der Handwerkzeugmaschine angeordneten Gelenkteil (252) eines Schwenkgelenks (25) aufweist, das so ausgebildet ist, dass durch Anschwenken des Trägers (13) an die Handwerkzeugmaschine die Einlassöffnung (17) in der in der Aufnahmekammer (21) einliegenden Versteifungsplatte (16) des Staubauffangbeutels (14) auf den Staubausblasstutzen (12) der Handwerkzeugmaschine (11) aufgeschoben wird.

3. Staubauffangvorrichtung nach Anspruch 2, **dadurch gekennzeichnet, dass** der trägerseitige Gelenkteil (251) als Schale (26) und der maschinenseitige Gelenkteil (252) als Zapfen (27) ausgebildet ist, der von der Schale (26) teilweise umgreifbar ist.

4. Staubauffangvorrichtung nach Anspruch 2 oder 3, **dadurch gekennzeichnet, dass** der trägerseitige Gelenkteil (251) an der in Arbeitsstellung einen Trägerseite angeordnet ist und an der anderen Trägerseite, dem trägerseitigen Gelenkteil (251) gegenüberliegend, ein Rastelement (291) angeordnet ist, das mit einem maschinenseitigen Rastelement (292) zur Herstellung einer Rastverbindung (29) zusammenwirkt.

5. Staubauffangvorrichtung nach Anspruch 4, **dadurch gekennzeichnet, dass** die Rastverbindung (29) am Ende des nach Herstellen des Schwenkgelenks (25) erfolgenden Anschwenkens des Trägers (13) an die Handwerkzeugmaschine hergestellt ist.

6. Staubauffangvorrichtung nach Anspruch 4 oder 5, **dadurch gekennzeichnet, dass** das trägerseitige Rastelement (291) als Rasthaken (30) und das maschinenseitige Rastelement (292) als von dem Rasthaken (30) übergreifbarer Rastbolzen (31) ausgebildet ist.

7. Staubauffangvorrichtung nach einem der Ansprüche 1 bis 6, **dadurch gekennzeichnet, dass** der Träger (13) ein oben offenes Gehäuse (19) aufweist, in dem die Aufnahmekammer (21) und die Filterkammer (20) von oben zugänglich sind, dass die Aufnahmekammer (21) von der Vorderwand (192) des Gehäuses (19) und von zwei parallel zu der Vorderwand (192) verlaufenden Führungsstege (22) begrenzt ist, von denen jeweils einer von einer Seitenwand (191) des Gehäuses (19) absteht und dass die Vorderwand (192) des Gehäuses (19) ein zur Einlassöffnung (17) des in das Gehäuse eingesetzten Staubauffangbeutels (14) koaxiales Zentralloch (24) aufweist.

8. Staubauffangvorrichtung nach Anspruch 7, **dadurch gekennzeichnet, dass** der Abstand der Führungsstege (22) von der Vorderwand (192) des Gehäuses (19) wenig größer ist als die Dicke der Versteifungsplatte (16) des Staubauffangbeutels (14).

## Claims

1. Dust collection device for a portable power tool having a dust exhaust connecting piece (12), in particular for a portable electric sander, comprising a dust collection bag (14) which has an air-permeable filter sack (15) and a reinforcing plate (16) situated in front of the filter sack (15) and having an inlet opening (17) designed for pushing onto the dust exhaust connecting piece (12), **characterized by** a support (13) which is designed to be attachable to the portable power tool and which has a filter chamber (20) for inserting the filter sack (15) and a locating chamber (21) arranged in front of the filter chamber (20) for pushing in the reinforcing plate (16).

2. Dust collection device according to Claim 1, **characterized in that** the support (13), on its front end defining the locating chamber (21) on the side facing away from the filter chamber (20), has a joint part (251) for detachably connecting to a joint part (252), arranged on the portable power tool, of a pivot joint (25) which is designed in such a way that the inlet opening (17) in the reinforcing plate (16), resting in the locating chamber (21), of the dust collection bag (14) is pushed onto the dust exhaust connecting piece (12) of the portable power tool (11) by pivoting the support (13) against the portable power tool.

3. Dust collection device according to Claim 2, **characterized in that** the joint part (251) on the support is designed as a shell (26) and the joint part (252) on the power tool is designed as a pin (27) which can be partly enclosed by the shell (26).

4. Dust collection device according to Claim 2 or 3, **characterized in that** the joint part (251) on the support is arranged on the one support side in the working position, and a latching element (291) is arranged on the other support side, opposite the joint part (251) on the support, said latching element (291) interacting with a latching element (292) on the power tool for producing a latching connection (29).

5. Dust collection device according to Claim 4, **characterized in that** the latching connection (29) is produced at the end of the pivoting of the support (13) against the portable power tool, said pivoting taking place after the pivot joint (25) has been produced.

6. Dust collection device according to Claim 4 or 5, **characterized in that** the latching element (291) on the support is designed as a latching hook (30) and the latching element (292) on the power tool is designed as a latching bolt (31), over which the latching hook (30) can engage.

7. Dust collection device according to one of Claims 1 to 6, **characterized in that** the support (13) has a housing (19) which is open at the top and in which the locating chamber (21) and the filter chamber (20) are accessible from above, **in that** the locating chamber (21) is defined by the front wall (192) of the housing (19) and by two guide webs (22) which run parallel to the front wall (192) and each of which projects from a side wall (191) of the housing (19), and **in that** the front wall (192) of the housing (19) has a central hole (24) coaxial to the inlet opening (17) of the dust collection bag (14) inserted into the housing.

8. Dust collection device according to Claim 7, **characterized in that** the distance of the guide webs (22) from the front wall (192) of the housing (19) is slightly greater than the thickness of the reinforcing plate (16) of the dust collection bag (14).

## Revendications

1. Dispositif de reprise des poussières pour outil manuel motorisé présentant une tubulure (12) de soufflage de poussières, en particulier pour ponceuse électrique manuelle, et présentant un sac (14) de reprise de poussières doté d'un sac de filtre (15) perméable à l'air et d'une plaque de renfort (16) placée en avant du sac de filtre (15) et dotée d'une ouverture d'admission (17) configurée pour être glissée sur la tubulure (12) de sortie de poussières, **caractérisé par**
un support (13) qui est configuré de manière à pouvoir être placé sur l'outil manuel motorisé et qui présente une chambre de filtre (20) dans laquelle est placé le sac de filtre (15) et une chambre de reprise (21) disposée en amont de la chambre de filtre (20) et dans laquelle la plaque de renfort (16) est glissée.

2. Dispositif de reprise des poussières selon la revendication 1, **caractérisé en ce que** le support (13) présente à son extrémité avant qui délimite le côté de la chambre de reprise (21) non tourné vers la chambre de filtre (20) une pièce articulée (251) qui permet une liaison libérable avec une pièce articulée (252) d'une articulation pivotante (25) disposée sur l'outil manuel motorisé et qui est configurée de telle sorte que lorsque le support (13) est articulé sur l'outil manuel motorisé, l'ouverture d'admission (17) ménagée dans la plaque de renfort (16) du sac (14) de reprise de poussières, placée dans la chambre de reprise (21), est glissée sur la tubulure (12) de soufflage de poussières de l'outil manuel motorisé (11).

3. Dispositif de reprise des poussières selon la revendication 2, **caractérisé en ce que** la partie articulée (251) située du côté support est configurée comme coquille (26) et la partie articulée (252) située côté machine comme tourillon (27) dont une partie peut être entourée par la coquille (26).

4. Dispositif de reprise des poussières selon la revendication 2 ou 3, **caractérisé en ce que** la pièce articulée (251) située côté support est disposée sur un des côtés du support en position de travail et **en ce qu'**un élément d'encliquetage (291) qui coopère avec un élément d'encliquetage (292) côté machine pour établir une liaison encliquetable (29) est disposé sur l'autre côté du support, situé face à la pièce articulée (251) située côté support.

5. Dispositif de reprise des poussières selon la revendication 4, **caractérisé en ce que** la liaison encliquetable (29) est établie à la fin de l'articulation du support (13) sur l'outil manuel motorisé qui est obtenue après établissement de l'articulation pivotante (25).

6. Dispositif de reprise des poussières selon la revendication 4 ou 5, **caractérisé en ce que** l'élément d'encliquetage (291) situé côté support est configuré comme crochet d'encliquetage (30) et l'élément d'encliquetage (292) situé côté machine comme goujon d'encliquetage (31) qui peut être chevauché par le crochet d'encliquetage (30).

7. Dispositif de reprise des poussières selon l'une des revendications 1 à 6, **caractérisé en ce que** le support (13) présente un boîtier (19) ouvert dans lequel la chambre de reprise (21) et la chambre de filtre (20) sont accessibles par le haut, **en ce que** la chambre de reprise (21) est délimitée par la paroi avant (192) du boîtier (19) et par deux nervures de guidage (22) qui s'étendent parallèlement à la partie avant (192) et dont l'une est située à distance d'une paroi latérale (191) du boîtier (19) et **en ce que** la paroi avant (192) du boîtier (19) présente un trou central (24) coaxial par rapport à l'ouverture d'admission (17) du sac (14) de reprise de poussières inséré dans le boîtier.

8. Dispositif de reprise des poussières selon la revendication 7, **caractérisé en ce que** la distance entre la nervure de guidage (22) et la paroi avant (192) du boîtier (19) est inférieure à l'épaisseur de la plaque de renfort (16) du sac (14) de reprise de poussières.
